# EUROPÄISCHE PATENTSCHRIFT

(11) **EP 1 306 252 B1**
(45) Veröffentlichungstag und Bekanntmachung des Hinweises auf die Patenterteilung: **09.08.2006**
(21) Anmeldenummer: 02023266.6
(22) Anmeldetag: 17.10.2002
(51) Int. Cl.: B60J 3/02

(54) **Sonnenblende für Fahrzeuge**
Sun visor for vehicles
Pare-soleil pour voitures

(30) Priorität: 27.10.2001 DE 10153154
(43) Veröffentlichungstag der Anmeldung: 02.05.2003
(73) Patentinhaber: Johnson Controls Interiors GmbH & Co. KG, 42285 Wuppertal (DE)
(72) Erfinder: Viertel, Lothar, 66802 Altforweiler (DE); Welter, Patrick, 57730 Lachambre (FR)
(74) Vertreter: Hemmelmann, Klaus

(56) Entgegenhaltungen:
- EP-A- 0 899 137
- DE-A- 3 324 169
- US-A- 4 711 483
- US-A- 4 948 240
- US-A- 4 961 608
- US-A- 5 205 639
- US-A- 5 813 717

## Beschreibung

Die Erfindung bezieht sich auf eine Sonnenblende für Fahrzeuge, mit einem Spiegel, der vertieft in einer Aussparung des Sonnenblendenkörpers liegt, und einer manuell betätigbaren Spiegelabdeckung in Form eines aus Kunststoff bestehenden Schiebers, der auf der dem Spiegel abgekehrten Seite eine Griffleiste aufweist und mit seinen in der Verschieberichtung verlaufenden Rändern in je eine nutartige Führung eingreift und an einem seiner beiden in der Verschieberichtung verlaufenden Ränder Federelemente aufweist.

### Stand der Technik

Bei den zur Zeit gebräuchlichen Sonnenblenden mit einer Spiegelabdeckung in Form eines Schiebers wird der Schieber mit seinen in der Verschieberichtung verlaufenden Rändern in U-förmigen Führungen geführt. Die U-förmigen Führungen bewirken eine dreiseitige Flächenberührung im oberen und unteren Führungsbereich des Schiebers, die eine kontrollierbare und beherrschbare Gleitung des Schiebers in den Führungen nicht zuläßt. In der Regel werden die Teile, d.h. der Schieber und die Führungen mit einem maßlich sehr großen Toleranzspiel produziert, um den Schieber auch noch bei größeren Temperaturschwankungen betätigen zu können. Dieses relativ große Toleranzspiel führt aber häufig zu Reklamationen, da sich hierdurch der Schieber ungewollt verschieben kann und auch - was noch weniger erwünscht ist - zu einer recht unangenehmen Geräuschquelle entwickeln kann, indem er Klappergeräusche verursacht.

Um ein verbessertes Gleiten des Schiebers in den U-förmigen Führungen zu erreichen, wurden schon an den in der Verschieberichtung verlaufenden Rändern des Schiebers Metallfedern angeordnet, die aber nicht dazu führen konnten, die unangenehmen Klappergeräusche abzustellen, siehe z.B. US-A-4,948,240. Bei einer Sonnenblende der eingangs genannten Art, weist der Schieber an wenigstens einem seiner beiden in der Verschieberichtung verlaufenden Ränder federnde Vorsprünge auf, wobei jeder Vorsprung durch eine nach außen gewölbte, sich am Boden der U-förmigen Führung abstützenden Leiste gebildet ist, die an ihren beiden Enden einstückig mit dem Schieber ausgebildet, im übrigen durch einen Schlitz vom Schieber getrennt ist. Aber auch bei dieser bekannten Ausführungsform kann der Schieber in den U-förmigen Führungen klappern, da die Öffnungsweite der U-förmigen Führung größer bis wesentlich größer als die Dicke der darin eingreifenden Schieberränder ist. Bei einer Verkleinerung der Öffnungsweite besteht die Gefahr, dass sich der Schieber bei Materialausdehnung infolge thermischer Belastung nicht mehr betätigen lässt.

### Aufgabe

Der vorliegenden Erfindung liegt hiernach die Aufgabe zugrunde, eine Sonnenblende der eingangs genannten Art mit einer verbesserten, insbesondere auch klapperfreien Führung für den Spiegelabdeckschieber zur Verfügung zu stellen.

### Lösung

Zur Lösung dieser Aufgabe ist erfindungsgemäß vorgesehen, dass die in der Verschieberrichtung verlaufenden Ränder des Schiebers ebenso wie die zur Führungsaufnahme der Ränder vorgesehenen nutartigen Führungen V- bzw. umgekehrt V-förmig ausgebildet sind und dass der die Federelemente aufweisende Rand des Schiebers mit Ausnehmungen versehen ist, die jeweils einen Ausnehmungsboden und eine vom Ausnehmungsboden ausgehende taschenartige Vertiefung aufweisen, die jeweils zur Aufnahme eines Federelements bestimmt ist, wobei die Federelemente jeweils aus hochgleitfähigem Kunststoffmaterial gefertigt und mit in die taschenartige Vertiefung eingreifenden Steckstegen, jeweils einem sich zwischen den Steckstegen erstreckenden Federbügel und einen in eine der nutartigen Führungen eingreifenden V- bzw. umgekehrt V-förmig gestalteten Kopfteil ausgebildet sind.

Durch die erfindungsgemäßen Maßnahmen wird in einfacher und kostengünstiger Weise eine wesentliche Qualitätsverbesserung erreicht. Der Schieber weist aufgrund des V-förmigen Ineinandergreifens mit seinen Führungen nur noch zwei Gleitflächen oberseitig und unterseitig auf, so dass er senkrecht zur Schieberebene nicht mehr wackeln und daher auch nicht mehr klappern kann. Einem Wackeln oder Klappern in Schieberebene wirken die Federelemente, mit denen der Schieber ausgerüstet ist, entgegen.

### Figuren

Ein Ausführungsbeispiel der Erfindung wird im folgenden anhand der Zeichnung näher erläutert, und es zeigen:
- Fig. 1: eine Sonnenblende in Ansicht,
- Fig. 2: eine Verstärkungseinlage für die Sonnenblende nach Fig. 1,

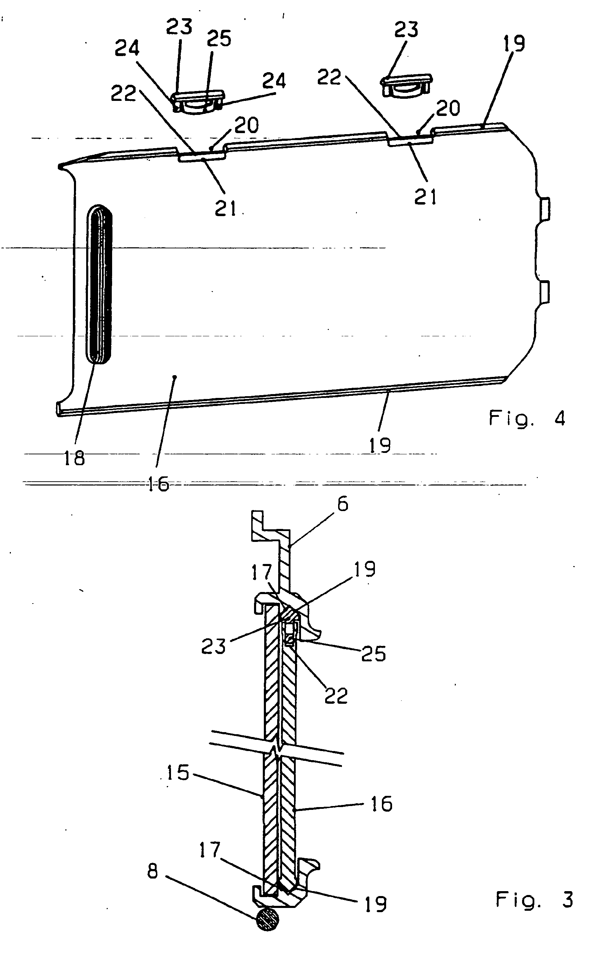

- Fig. 3: einen Schnitt etwa folgend der Linie A-A in Fig. 2 und
- Fig. 4: eine Einzelheit der Sonnenblende.

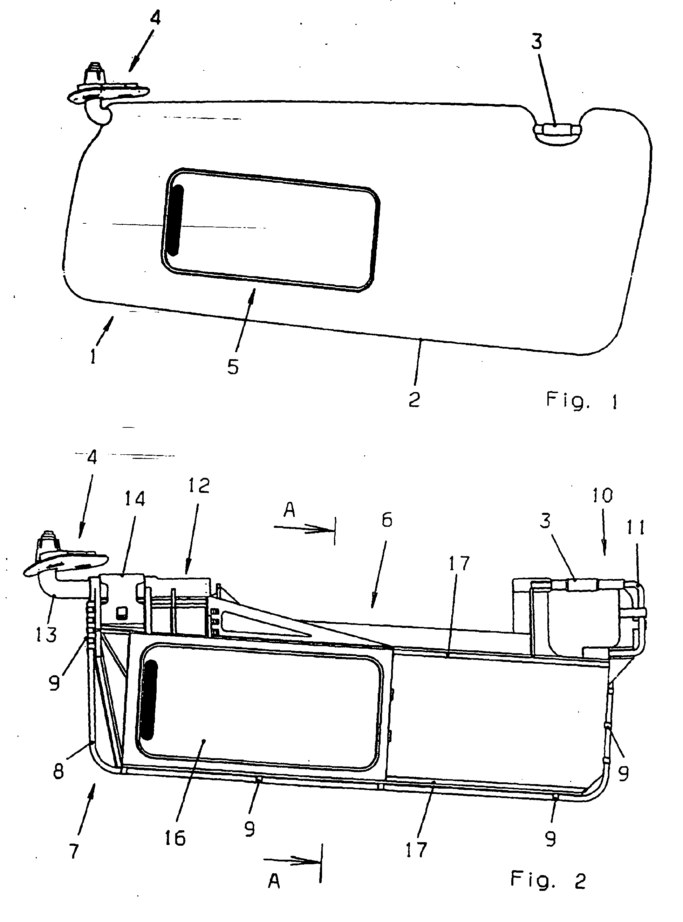

Fig. 1 stellt eine komplette Sonnenblende 1 dar, bestehend aus einem umhüllten Sonnenblendenkörper 2 mit einem Gegenlagerstift 3, einem montierten Anschraubaggregat 4 und einem im Sonnenblendenkörper 2 integriertem Spiegelsystem 5.

Fig. 2 zeigt eine im wesentlich aus Kunststoffspritzguß erstellte Verstärkungseinlage 6, die zur Vermeidung von Verwindungen im äußeren Bereich 7 eine U-förmige Drahtstabilisierung 8 aufweist, die an Einklipsstellen 9 festgelegt ist. Im Gegenlagerbereich 10 ist der an der Verstärkungseinlage 6 angespritzte Gegenlagerstift 3 mit einem Drahtbügel 11 durch Steckmontage verstärkt, um die Crashforderungen zu erfüllen. Die Verstärkungseinlage 6 weist einen Achsaufnahmebereich 12 für die Achse 13 des Anschraubaggregats 4 auf sowie eine Rastfeder 14 für das Gleit-/Rastmoment. Da die Verstärkungseinlage 6 vornehmlich für ein Blendenkörperhalbschalensystem vorgesehen ist, ist der Spiegel 15 mit dem Schieber 16 entsprechend Schnitt A-A ebenso vormontiert wie das Anschraubaggregat 4. Die obere und untere V-artige Führung 17 für den Schieber 16 erstreckt sich nahezu über die gesamte Länge der Verstärkungseinlage 6.

Der Schieber 16 ist ein Kunststoffspritzteil mit etwa rechteckiger Form mit einer Griffleiste 18 und der Ausbildung einer oberen und unteren V-artigen oder umgekehrt V-förmigen Randkante 19, wobei die obere Randkante 19 zwei Ausnehmungen 20 aufweist, die im Boden 21 jeweils mit einer taschenartigen Vertiefung 22 versehen sind, welche zur Aufnahme der beiden Gleit-/Federelemente 23, die aus gut gleitfähigem Kunststoff abgespritzt sind, dienen.

Die beiden Gleit-/Federelemente 23 weisen an der Oberseite (Kopfteil 26) ebenso eine V- bzw. dachartige Ausbildung 19 auf wie die am Schieber 16, haben jeweils zwei Steckstege 24 für die Montage in die taschenartige Vertiefung 22 und jeweils einen Federbügel 25. Es verstehe sich, dass die Gleit-/Federelemente 23 bei entlastetem Federbügel 25 die obere Randkante 19 des Schiebers 16 überragen und somit im montierten Zustand unter der Kraft der Federbügel 25 stehend in die obere Führung 17 eingreifen.

Die obere und unter V-artige Randkante 19 am Schieber 16 und die obere und untere V-artige Führung 17 der Verstärkungseinlage 6 bewirken durch ihre Kombination, der maßlichen Abstimmung und den beiden Gleit-/Federelementen 23, zum einen eine optimale Schiebe-/Gleitwirkung und zum anderen eine klapper- und spielfreie Paarung aufgrund der besonderen Formgebung der Gleit- und Führungszonen.

### Bezugszeichen

- 1: Sonnenblende
- 2: Sonnenblendenkörper
- 3: Gegenlagerstift
- 4: Anschraubaggregat
- 5: Spiegelsystem
- 6: Verstärkungseinlage
- 7: äußerer Bereich
- 8: Drahtstabilisierung
- 9: Einklipsstellen
- 10: Gegenlagerbereich
- 11: Drahtbügel
- 12: Achsaufnahmebereich
- 13: Achse
- 14: Rastfeder
- 15: Spiegel
- 16: Schieber
- 17: Führung
- 18: Griffleiste
- 19: Randkante
- 20: Ausnehmung
- 21: Boden
- 22: Vertiefung
- 23: Gleit-/Federelement
- 24: Stecksteg
- 25: Federbügel
- 26: Kopfteil

## Patentansprüche

1. Sonnenblende für Fahrzeuge mit einem Spiegel (15), der vertieft in einer Aussparung des Sonnenblendenkörpers (2) liegt, und einer manuell betätigbaren Spiegelabdeckung in Form eines aus Kunststoff bestehenden Schiebers (16), der auf der dem Spiegel (15) abgekehrten Seite eine Griffleiste (18) aufweist und mit seinen in der Verschieberichtung verlaufenden Rändern (19) in je eine nutartige Führung (17) eingreift und an einem seiner beiden in der Verschieberichtung verlaufenden Ränder (19) Federelemente (23) aufweist, **dadurch gekennzeichnet, dass** die in der Verschieberichtung verlaufenden Ränder (19) des Schiebers (16) ebenso wie die zur Führungsaufnahme der Ränder (19) vorgesehenen nutartigen Führung (17) V- bzw. umgekehrt V-förmig ausgebildet sind und dass der die Federelemente 23 aufweisende Rand (19) des Schiebers (16) mit Ausnehmungen (20) versehen ist, die jeweils einem Ausnehmungsboden (21) und eine vom Ausnehmungsboden (21) ausgehende taschenartige Vertiefung (22) aufweisen, die jeweils zur Aufnahme eines Federelements (23) bestimmt ist, wobei die Federelemente (23) jeweils aus hochgleitfähigem Kunststoffmaterial gefertigt und mit in die taschenartige Vertiefung (22) eingreifenden Steckstegen (24), jeweils einem sich zwischen den Steckstegen (24) erstreckenden Federbügel (25) und einen in eine der nutartigen Führungen (17) eingreifenden V- bzw. umgekehrt V-förmig gestalteten Kopfteil (26) ausgebildet sind.

## Claims

1. Sun visor for vehicles, with a mirror (15), which is situated in a recessed manner in a cutout of the sun visor body (2), and a manually actuatable mirror covering in the form of a slide (16), which is composed of plastic, has a gripping strip (18) on the side facing away from the mirror (15) and, by means of its edges (19) running in the displacement direction, engages in a respective groove-like guide (17) and has spring elements (23) on one of its two edges (19) running in the displacement direction, **characterized in that** those edges (19) of the slide (16) which run in the displacement direction are of V- or upside down V-shaped design, just like the groove-like guide (17) provided for the guiding reception of the edges (19), and **in that** that edge (19) of the slide (16) which has the spring elements (23) is provided with recesses (20), which each have a recess base (21) and a pocket-like depression (22), which originates from the recess base (21) and is intended in each case to receive one spring element (23), the spring elements (23) being manufactured in each case from a highly glideable plastic material and being designed with plug-in webs (24) engaging in the pocket-like depression (22), a respective spring clip (25) extending between the plug-in webs (24) and a head part (26) of V- or upside down V-shaped design engaging in one of the groove-like guides (17).

## Revendications

1. Pare-soleil pour véhicules comprenant un miroir (15) qui est renfoncé dans un évidement du corps du pare-soleil (2), et un recouvrement de miroir actionnable manuellement en forme de coulisseau en plastique (16), qui présente du côté opposé au miroir (15) une tige de préhension (18) et qui vient en prise avec ses bords (19) s'étendant dans la direction de coulissement dans une glissière respective en forme de rainure (17) et présente sur l'un de ses deux bords (19) s'étendant dans la direction de coulissement des éléments de ressort (23), **caractérisé en ce que** les bords (19) du coulisseau (16) s'étendant dans la direction de coulissement ainsi que la glissière (17) en forme de rainure prévue pour recevoir par guidage les bords (19) sont réalisés en forme de V ou de V inversé et **en ce que** le bord (19) du coulisseau (16) présentant les éléments de ressort (23) est pourvu d'évidements (20) qui présentent chacun un fond d'évidement (21) et un renfoncement (22) en forme de poche partant du fond d'évidement (21), qui est prévu à chaque fois pour recevoir un élément de ressort (23), les éléments de ressort (23) étant chacun fabriqués en matériau en plastique de grand pouvoir glissant et étant réalisés avec des nervures d'enfichage (24) venant en prise dans le renfoncement en forme de poche (22), un étrier à ressort (25) s'étendant à chaque fois entre les nervures d'enfichage (24) et une partie de tête (26) en forme de V ou de V inversé venant en prise dans l'une des glissières en forme de rainure (17).
